**Europäisches Patentamt**

**European Patent Office**

**Office européen des brevets**

(19)

(11) Numéro de publication: **0 033 576**
**B1**

(12) **FASCICULE DE BREVET EUROPEEN**

(45) Date de publication du fascicule du brevet: **11.07.84**

(51) Int. Cl.³: **B 60 K 15/00**

(21) Numéro de dépôt: **81200127.9**

(22) Date de dépôt: **03.02.81**

(54) Réservoir à carburant pour véhicule automobile.

(30) Priorité: **04.02.80 FR 8002411**

(43) Date de publication de la demande:
**12.08.81 Bulletin 81/32**

(45) Mention de la délivrance du brevet:
**11.07.84 Bulletin 84/28**

(84) Etats contractants désignés:
**AT BE DE FR GB IT NL SE**

(56) Documents cités:
**FR - A - 652 985**
**FR - A - 2 076 329**
**GB - A - 988 929**
**US - A - 2 846 231**

(73) Titulaire: **Société de Transformation des Matières Plastiques**
**Zone Industrielle du Point du Jour Avenue d'Angers**
**F-53002 Laval (FR)**

(72) Inventeur: **Héaumé, Jean**
**Rue Senelle, 54**
**F-53000 Laval (FR)**

(74) Mandataire: **Bouchoms, Maurice et al,**
**Solvay & Cie Département de la propriété industrielle 310, rue de Ransbeek**
**B-1120 Bruxelles (BE)**

Courier Press, Leamington Spa, England.

## Description

La présente invention concerne un réservoir à carburant pour véhicule automobile qui est conçu de façon à pouvoir être fixé au véhicule de façon très efficace et durable par suspension.

Les réservoirs à carburant, et en particulier ceux réalisés à partir de matières thermoplastiques, sont généralement suspendus et fixés aux véhicules par des sangles métalliques qui les entourent et qui sont solidaires d'organes fixes des véhicules. La fixation par des sangles des réservoirs à carburant est une opération délicate car il convient, d'une part, que les sangles soient suffisamment serrées pour assurer une fixation efficace et d'autre part, qu'elles ne soient pas trop serrées pour éviter de provoquer un cisaillement au cours du temps de la paroi du réservoir.

Par ailleurs, la fixation au moyen de sangles métalliques présente un autre inconvénient grave dans le cas de réservoirs réalisés en matières thermoplastiques. En effet, pour être acceptable, ce type de réservoirs doit résister avec succès au feu. Les essais effectués pour évaluer cette résistance impliquent généralement que le réservoir résiste durant un temps relativement long à l'action d'une flamme directe. Dans ce cas, on a constaté que la présence de sangles métalliques qui sont bonnes conductrices de la chaleur a pour effet de hâter notablement la fusion de la paroi du réservoir là où elle est en contact avec ces sangles. Pour remédier à ce défaut, on a eu recours à des sangles métalliques revêtues d'un isolant thermique. Ceci accroît le coût de la fixation et rend celle-ci parfois plus malaisée.

La présent invention vise à fournir des réservoirs de conception particulière qui ne présentent plus les inconvénients décrits ci-avant du fait qu'ils peuvent être fixés au véhicule très efficacement non plus par des sangles mais au moyen de crochets de suspension.

Ces crochets peuvent être de section circulaire, ovale ou rectangulaire afin d'assurer une préhension plus ou moins large du réservoir.

Elle concerne à cet effet un réservoir à carburant pour véhicule automobile destiné à être suspendu sous le véhicule et dont la paroi inférieure présente sur sa périphérie des bossages faisant saillie vers le bas, et ayant un profil tel qu'il puissent s'insérer dans la tête recourbée de crochets de suspension.

Selon un mode de réalisation préféré les bossages sont ménagés dans un creux dans les parois latérales permettant de bloquer latéralement la tête recourbée de crochet de fixation engagée dans le bossage.

Le nombre de bossages peut être quelconque et correspond évidemment au nombre de crochets de suspension utilisés pour la fixation du réservoir. Ces bossages peuvent être répartis sur toute la périphérie de la paroi inférieure du réservoir ou seulement dans certaines zones de cette périphérie.

Dans un mode de réalisation préféré, la paroi latérale du réservoir présente des rainures verticales situées au droit des bossages qui peuvent loger la partie droite des crochets de suspension, de préférence par un effet d'encliquetage de ces parties.

Selon un autre mode de réalisation avantageux le réservoir présente sur sa paroi supérieure des saillies ou des creux pouvant assurer un blocage vertical et/ou latéral du réservoir par coopération avec des éléments fixes du véhicule automobile.

Le réservoir peut être réalisé en métal par les techniques classiques telles que l'emboutissage. Toutefois, on préfère réaliser le réservoir en matière thermoplastique et notamment à partir de polyoléfines, telles que le polyéthylène à haute densité, éventuellement réticulées, ou de résines contenant des unités dérivées du nitrile acrylique. Dans ce cas, le réservoir conforme à l'invention peut être réalisé directement en une seule opération par moulage et notamment par la technique connue de moulage par soufflage.

La fixation du réservoir selon l'invention est très aisée car il suffit soit de l'insérer de force entre les crochets de fixation déjà placés et de s'assurer que ceux-ci s'insèrent dans les bossages et éventuellement dans les rainures verticales, soit de maintenir le réservoir en place et de procéder ensuite au placement des crochets de suspension.

De préférence, les crochets de suspension utilisés peuvent être réalisés en métal ou en matière plastique. S'ils sont en métal ils peuvent être avantageusement recouverts d'une matière plastique ou d'un autre revêtement thermiquement isolant afin de garantir un bon comportement au feu du réservoir à carburant. Ces crochets peuvent être de section circulaire, ovale ou rectangulaire afin d'assurer une préhension plus ou moins large du réservoir.

Le réservoir à carburant conforme à l'invention peut encore comporter d'autres reliefs ou rainures que ceux décrits ci-avant dont la fonction peut être de rigidifier sa forme.

Le réservoir selon l'invention est par ailleurs illustré par les figures des dessins annexés qui montrent deux modes particuliers de réalisation possible et qui sont données à titre purement explicatif et non limitatif.

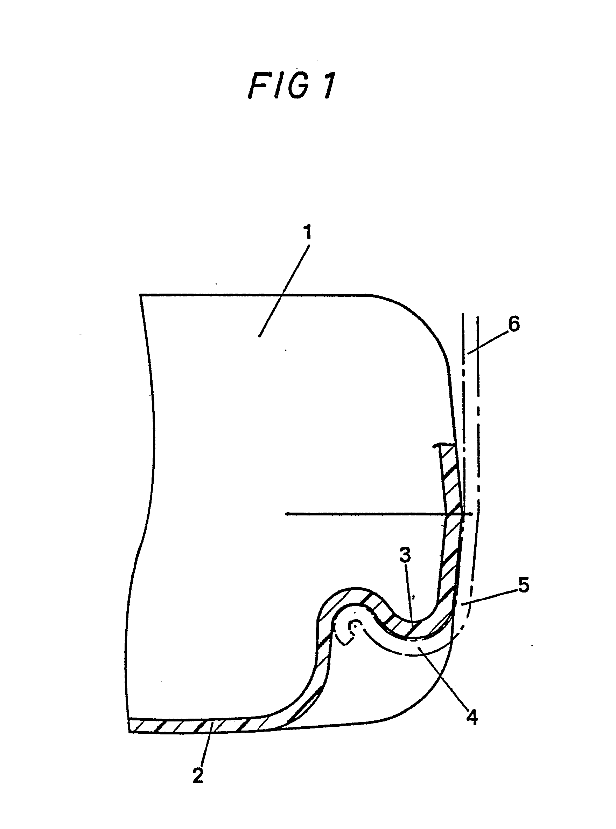

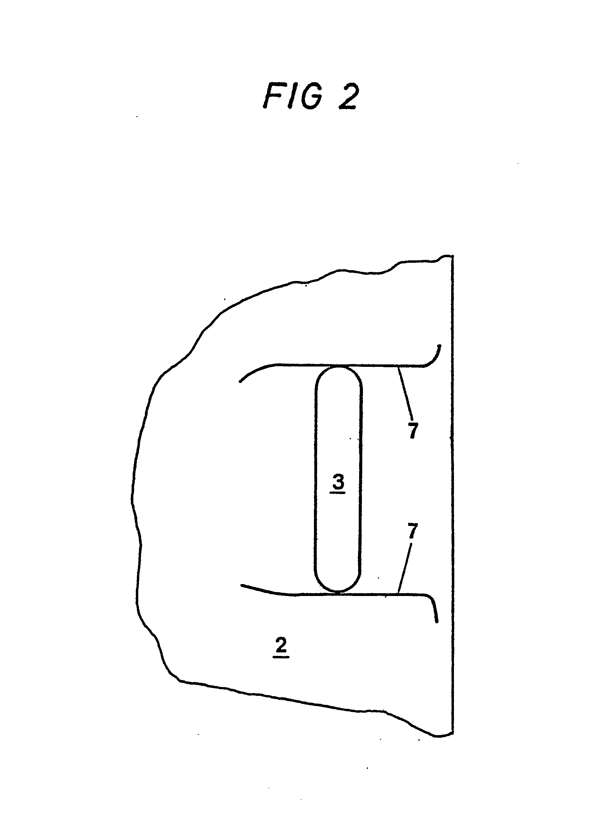

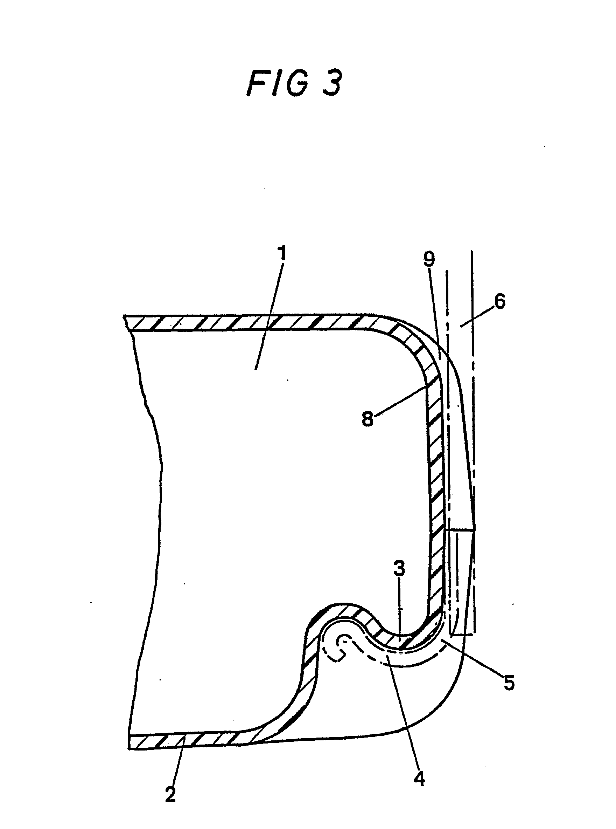

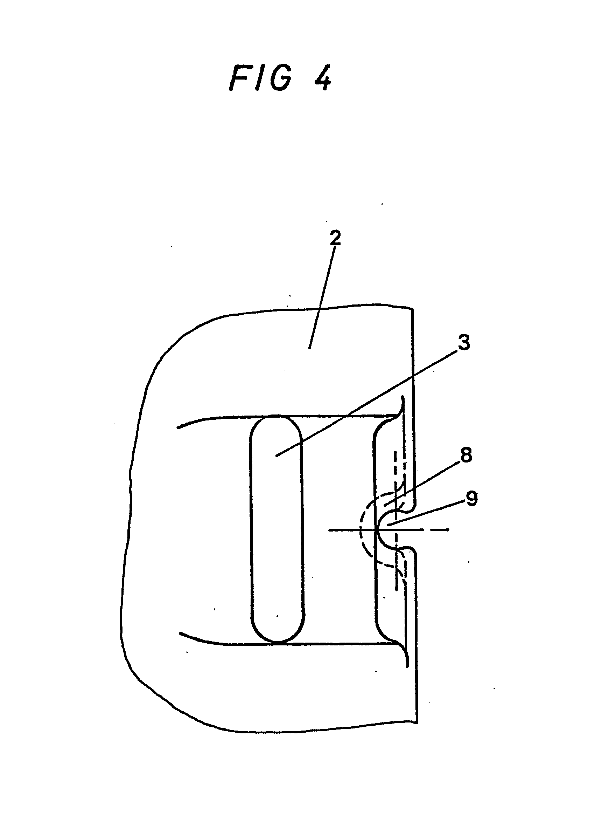

Dans les dessins, les figures 1 et 2 sont des vues partielles en élévation et en plan se rapportant à un premier mode de réalisation tandis que les figures 3 et 4 sont des vues similaires se rapportant à un second mode de réalisation, les figures 1 et 3 étant en coupe.

Ainsi qu'il apparaît aux figures 1 et 2 le réservoir à carburant 1 montré partiellement comporte sur la périphérie de sa paroi inférieure 2 des bossages 3 qui permettent l'engagement de la tête recourbée 4 de crochets de suspension 5 dont la partie droite 6 est fixée au véhicule automobile.

Le bossage 3 est ménagé à l'intérieur d'un creux dont les parois latérales 7 bloquent la recourbée 4 des crochets 5 et empêchent les crochets de coulisser latéralement.

Dans les figures, on n'a représenté qu'un seul bossage et, dans la figure 2 le crochet de suspension n'est pas représenté.

Les figures 3 et 4 illustrent un second mode de réalisation analogue à celui des figures 1 et 2 et faisant également appel à des bossages 3 prévus sur la périphérie de la paroi inférieure 2 du réservoir à carburant 1 partiellement représenté. Dans ce mode de réalisation, la paroi latérale 8 du réservoir à carburant 1 comporte des rainures verticales 9 situées au droit des bossages 3 et pouvant emprisonner la partie droite 6 des crochets de suspension 5. Dans la figure 4, le crochet de suspension n'est pas représenté.

**Revendications**

1. Réservoir à carburant pour véhicule automobile destiné à être suspendu sous le véhicule, caractérisé en ce que sa paroi inférieure (2) présente sur sa périphérie des bossages (3) faisant saillie vers le bas, et ayant un profil tel qu'ils puissent s'insérer dans la tête recourbée (4) de crochets de suspension (5).

2. Réservoir selon la revendication 1 caractérisé en ce que les bossages (3) sont ménagés dans des creux dont les parois latérales (7) permettent de bloquer la tête recourbée (4) des crochets de suspension (5).

3. Réservoir à carburant selon la revendication 1 ou 2 caractérisé en ce que sa paroi latérale (8) présente des rainures verticales (9) situées au droit des bossages (3) pouvant loger la partie droite (6) des crochets de suspension (5).

4. Réservoir selon la revendication 3 caractérisé en ce que les rainures verticales (9) sont profilées de manière à permettre l'encliquetage de la partie droite (6) des crochets (5).

5. Réservoir selon l'une quelconque des revendications 1 à 4 caractérisé en ce que sa paroi supérieure présente des saillies ou des creux povuant assurer un blocage du réservoir en coopération avec des éléments fixes du véhicule.

6. Réservoir selon l'une quelconque des revendications 1 à 5 caractérisé en ce qu'il est réalisé à partir d'une matière thermoplastique.

7. Réservoir selon la revendication 6 caractérisé en ce qu'il est réalisé à partir d'une polyoléfine.

8. Réservoir selon la revendication 6 ou 7 caractérisé en ce qu'il est réalisé par moulage par soufflage.

**Patentansprüche**

1. Kraftstofftank für Kraftfahrzeug, der unter dem Fahrzeug aufzuhängen ist, dadurch gekennzeichnet, daß seine untere Wand (2) auf ihrem Umfang Vorsprünge (3) aufweist, die nach unten vorstehen und ein solches Profil aufweisen, daß sie sich in den umgebogenen Kopf (4) von Aufhängehaken (5) einsetzen können.

2. Kraftstofftank nach Anspruch 1, dadurch gekennzeichnet, daß die Vorsprünge (3) in Hohlräumen angeordnet sind, deren Seitenwände (7) ein Festhalten des umgebogenen Kopfs (4) der Aufhängehaken (5) gestatten.

3. Kraftstofftank nach Anspruch 1 oder 2, dadurch gekennzeichnet, daß seine Seitenwand (8) vertikale Vertiefungen (9) aufweist, die an der Stelle der Vorsprünge (3) angeordnet sind und den geraden Teil (6) der Aufhängehaken (5) aufnehmen können.

4. Kraftstofftank nach Anspruch 3, dadurch gekennzeichnet, daß die vertikalen Vertiefungen (9) derart profiliert sind, daß sie das Einrasten des geraden Teils (6) der Haken (5) gestatten.

5. Kraftstofftank nach irgendeinem der Ansprüche 1 bis 4, dadurch gekennzeichnet, daß seine obere Wand Vorsprünge oder Hohlräume aufweist, die ein Festlegen des Tanks in Zusammenarbeit mit am Fahrzeug festen Elementen gewährleisten können.

6. Kraftstofftank nach irgendeinem der Ansprüche 1 bis 5, dadurch gekennzeichnet, daß er aus einem thermoplastischen Material hergestellt ist.

7. Kraftstofftank nach Anspruch 6, dadurch gekennzeichnet, daß er aus einem Polyolefin hergestellt ist.

8. Kraftstofftank nach Anspruch 6 oder 7, dadurch gekennzeichnet, daß er durch Blasformen hergestellt ist.

**Claims**

1. Fuel tank for a motor vehicle, which is intended to be suspended under the vehicle, characterised in that its lower wall (2) possesses on its periphery, bosses (3) projecting downwards, and having a profile such that they can be inserted into the curved head (4) of the suspension hooks (5).

2. Tank according to Claim 1, characterised in that the bosses (3) are located in hollows, the side walls (7) of which make it possible to lock the curved head (4) of the suspension hooks (5).

3. Fuel tank according to Claim 1 or 2, characterised in that its side wall (8) possesses vertical grooves (9) located at right-angles to the bosses (3), which can house the straight part (6) of the suspension hooks (5).

4. Tank according to Claim 3, characterised in that the vertical grooves (9) are profiled so as to permit the snapping-in of the straight part (6) of the hooks (5).

5. Tank according to any one of Claims 1 to 4, characterised in that its upper wall possesses projections or hollows which can ensure locking of the tank in cooperation with fixed elements of the vehicle.

6. Tank according to any one of Claims 1 to 5, characterised in that it is made from a thermoplastic material.

7. Tank according to Claim 6, characterised in that it is made from a polyolefine.

8. Tank according to Claim 6 or 7, characterised in that it is produced by blow-moulding.

# FIG 1

# FIG 2

## FIG 3

FIG 4